(19) 

Europäisches
Patentamt
European
Patent Office
Office européen
des brevets

(11) **EP 4 578 584 A1**

(12) **EUROPEAN PATENT APPLICATION**
published in accordance with Art. 153(4) EPC

(43) Date of publication:
**02.07.2025 Bulletin 2025/27**

(21) Application number: 23856553.5

(22) Date of filing: **18.08.2023**

(51) International Patent Classification (IPC):
**B23K 11/11** *(2006.01)*  **B23K 11/10** *(2006.01)*
**B23K 11/30** *(2006.01)*  **B23K 11/00** *(2006.01)*
**B23K 35/00** *(2006.01)*

(86) International application number:
**PCT/CN2023/113830**

(87) International publication number:
**WO 2024/041463 (29.02.2024 Gazette 2024/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.08.2022 CN 202211007511**

(71) Applicant: **Shanghai Institute of Optics and Fine
Mechanics
Chinese Academy of Sciences
Shanghai 201800 (CN)**

(72) Inventors:
• YANG, Shanglu
  **Shanghai 201800 (CN)**
• WANG, Yanjun
  **Shanghai 201800 (CN)**

(74) Representative: **Rondano, Davide et al
Società Italiana Brevetti S.p.A.
Via Carducci 8
20123 Milano (IT)**

(54) **SPOT-WELDED JOINT AND MANUFACTURING METHOD THEREFOR**

(57) A spot-welded joint and a manufacturing method therefor. The spot-welded joint comprises a first workpiece (1), a second workpiece (2), and a weld nugget used for fixedly connecting the first workpiece (1) and the second workpiece (2). At least one of the outer surface of the first workpiece (1) and the outer surface of the second workpiece (2) comprises a basic surface and an indentation, wherein the indentation comprises a first surface (111) which is located in the center and protrudes outwards and a second surface (112) which is located on the periphery of the first surface (111) and recessed inwardly, and the maximum distance hl between the first surface (111) and the basic surface is smaller than the maximum distance h2 between the second surface (112) and the basic surface. The edge welding of the spot-welded joint is firmer, and the center is thinner, so that the generation of surface cracks and the formation of internal defects are reduced, thereby improving the welding spot strength.

Fig. 1

EP 4 578 584 A1

## Description

## Technical field

The present invention relates to the field of resistance spot welding, and more specifically, to a spot-welded joint formed by resistance spot welding of two or more layers of metal workpieces (especially aluminum alloy workpieces) and its manufacturing method.

## Background

With the gradual intensification of global warming and energy depletion, the exhaust emissions and energy consumption of automobiles are becoming increasingly serious. Experiments have shown that reducing the weight of automobiles by half will also reduce fuel consumption by nearly half. Due to the needs of environmental protection and energy conservation, lightweighting of automobiles has become a trend in the development of automobiles worldwide. Due to the advantages of high strength, light weight, excellent corrosion resistance, and suitability for various forming methods, aluminum alloy is widely used in automobile bodies as a structural weight can be reduced by more than 50% by replacing steel plate materials for welding.

At present, the main way of connecting aluminum alloys of the vehicle body in automobile manufacturing is mechanical connection by riveting. Riveting is a way that is costly, complicated, has poor surface quality, and increases the weight of the vehicle body. A full aluminum or hybrid vehicle body usually requires more than 1,500 nails. Resistance spot welding uses the heat generated by the resistance of the workpiece itself and between them to melt the material and achieve connection. Since it does not require filling materials during the connection process, has high production efficiency and is easy to automate, this method is widely used in vehicle body manufacturing, such as engine hood, doors, etc. With the application of aluminum alloys in automobiles, automobile manufacturers expect to continue using resistance spot welding to connect aluminum alloys.

However, due to the physical properties of aluminum alloy itself, there are many problems when using ordinary spot welding technology for welding. Due to the high electrical conductivity and thermal conductivity of aluminum alloy, particularly large current and pressure are required during spot welding. The use of high current and high electrode pressure leads to higher manufacturing costs during welding. Moreover, due to the narrow molding temperature range of aluminum alloy, there are severe spatter and internal defects during welding, as well as numerous surface cracks. The presence of high resistance oxide film on the surface will cause the welding electrode to wear faster and the electrode life to be shorter during the spot welding process, which will lead to a decrease in weld strength, poor surface quality and low aesthetics.

Patent CN104043898A discloses a method of using multiple raised annular ridges on a spherical electrode to puncture the surface oxide film, improve electrode life and surface quality. However, this method is prone to form crackss on the surface of the welded joint due to the fact that welding heat is still mainly concentrated in the center of the welded joint, leading to a decrease in welded joint strength.

Patent US6646221B2 discloses a method for secondary repair welding of aluminum spot welding. For welding points with small weld nuggets and poor quality, a circular concave cavity electrode is used to re-weld on the outside to expand the weld nugget size. Although this method can make the final weld nugget quality satisfy the standard, it is a method for existing welded joints with small weld nuggets, which requires multiple implementations and cannot suppress the elimination of internal defects and surface cracks in the welded joints. Moreover, the electrode life is lower.

Therefore, there is a need in this field for a resistance spot welded aluminum alloy joint and its manufacturing method that can achieve higher welding strength, longer electrode life, low cost, excellent surface quality, high aesthetics, and is easier to promote.

## Summary of the invention

The purpose of the present invention is to provide a resistance spot-welded joint and a manufacturing method therefor, so as to obtain a spot-welded joint with higher weld strength and fewer welding defects, and to solve the problems of spatter, serious defects, low welding strength, unstable welding quality, and low electrode life in aluminum alloy resistance spot welding in the prior art.

In the first aspect of the present invention, there is provided a spot-welded joint comprising a first workpiece, a second workpiece, and a weld nugget configured for fixedly connecting the first workpiece and the second workpiece; at least one of an outer surface of the first workpiece and an outer surface of the second workpiece comprising a base surface and an indentation; wherein the indentation comprises a first surface which is located in the center and protrudes outwards and a second surface which is located on the periphery of the first surface and recessed inwardly, and the maximum distance hl between the first surface and the base surface is smaller than the maximum distance h2 between the second surface and the base surface.

In another preferred embodiment, the first surface and/or the second surface have multiple discontinuous distributed protruding or recessed annular ridges; and a height of the annular ridge is 15-300 $\mu$m.

In another preferred embodiment, the weld nugget is in the shape of a circular pancake with a thin center and a thick periphery.

In another preferred embodiment, a longest distance s1 between a thinner area in middle of the weld nugget and the first surface of the workpiece, and a shortest distance s2 between a thicker area at peripheral and the second surface satisfy:

$$0.2 \leqslant s1 \leqslant w - 0.8\sqrt{w}$$ ; s2 ≤ 0.9w; s1 ≥ s2, preferably s1 ≥ 1.2*s2, where w is a thickness of the workpiece.

In another preferred embodiment, the first surface and/or the second surface are composed of a combination of multiple continuous flat surfaces and curved surfaces.

In another preferred embodiment, the spot-welded joint is a centrally symmetrical structure.

In the second aspect of the present invention, a pair of spot welding electrode caps are provided, which are configured for welding to obtain the above-mentioned spot-welded joint, wherein welding surfaces of the spot welding electrode caps have shapes adapted to outer surfaces of the first workpiece and the second workpiece, respectively.

In the third aspect of the present invention, there is provided a method for manufacturing the above-mentioned spot-welded joint by welding comprising:

(1) providing a pair of spot welding electrode caps, wherein welding surfaces of the spot welding electrode caps have shapes adapted to outer surfaces of the first workpiece and the second workpiece, respectively;

(2) a pre-pressing stage, by the spot welding electrode caps, applying electrode pressure to the first and second workpieces during the pre-pressing stage;

(3) a welding stage, applying one or more stages of welding current to the first workpiece and the second workpiece to form the weld nugget during the welding stage; and

(4) a condensation stage, condensing the weld nugget to form a final spot-welded joint during the condensation stage.

In another preferred embodiment, the welding stage comprises a pre-heating stage, a main welding stage, and a post-heating stage; an effective value of a welding current I1 during the pre-heating stage is 10-30KA, and an energization time t1 is 30-60ms; an effective value of a welding current I2 during the main welding stage is 20-60KA, and a total energization time t2 is 50-300ms; a welding current I3 during the post-heating stage is 15-40KA, and an energization time t3 is 20-100ms.

In another preferred embodiment, during the main welding stage, the weld nugget is formed by multiple identical or different current pulses, each welding current is 25-50KA, a duration of a single welding pulse is 5-30ms, a pulse interval time is 1-10ms; a number of pulses is at least 3; and a pulse interval cooling time is 1-10ms.

It should be understood that within the scope of the present invention, the above-mentioned technical features of the present invention and the technical features specifically described in the following (such as Examples) can be combined with each other to form a new or preferred technical solution. For the sake of space, they will not be repeated here.

**Description of the drawings**

In order to illustrate the technical solutions in the embodiments of the present application or in the prior art more clearly, the drawings required for the description of the embodiments or the prior art will be briefly described below. Obviously, the drawings in the following description are only some embodiments of the present application, and those of ordinary skill in the art may obtain other drawings according to these drawings without creative efforts.

Fig. 1 shows a schematic cross-sectional view of a typical spot-welded joint involved in the present invention;

Fig. 2 shows a partial schematic diagram of the surface indentation of the spot-welded joint in the present invention;

Fig. 3 shows a partial schematic diagram of the surface indentation of another spot-welded joint in the present invention;

Fig. 4 shows a partial schematic diagram of the surface indentation of another spot-welded joint in the present invention;

Fig. 5 shows a partial schematic diagram of the surface indentation of another spot-welded joint in the present invention;

Fig. 6 shows a partial schematic diagram of the surface indentation of another spot-welded joint in the present invention;

Fig. 7 shows a partial schematic diagram of the surface indentation of another spot-welded joint in the present invention;

Fig. 8 shows a partial schematic diagram of the second surface in the surface indentation of the spot-welded joint in the present invention;

Fig. 9 shows a partial schematic diagram of the second surface in the surface indentation of another spot-welded joint in the present invention;

Fig. 10 shows a schematic diagram of the cross-sectional shape of the annular ridge on the surface of the spot-welded joint;

Fig. 11 shows a schematic diagram of another cross-sectional shape of the annular ridge on the surface of the spot-welded joint;

Fig. 12 shows a schematic diagram of yet another cross-sectional shape of the annular ridge on the surface of the spot-welded joint;

Fig. 13 shows a partial schematic diagram of the surface indentation of another spot-welded joint in the present invention;

Fig. 14 shows a partial schematic diagram of the surface indentation of another spot-welded joint in the present invention;

Fig. 15 shows a schematic cross-sectional view of another spot-welded joint involved in the present invention;

Fig. 16 shows a schematic cross-sectional view of another spot-welded joint involved in the present invention;

Fig. 17 shows a schematic cross-sectional view of another spot-welded joint involved in the present invention;

Fig. 18 shows a schematic cross-sectional view of another spot-welded joint involved in the present invention;

Fig. 19 shows a schematic cross-sectional view of another spot-welded joint involved in the present invention;

Fig. 20 shows a schematic cross-sectional view of another spot-welded joint involved in the present invention;

Fig. 21 shows a schematic cross-sectional view of another spot-welded joint involved in the present invention;

Fig. 22 shows a partial cross-sectional schematic diagram of a welding electrode involved in the present invention;

Fig. 23 shows a timing diagram of spot welding current and pressure involved in the present invention;

Fig. 24 shows another timing diagram of spot welding current and pressure involved in the present invention;

Fig. 25 shows the welded image of the surface of a conventional spot-welded joint in the prior art;

Fig. 26 shows the welded image of the surface of the spot-welded joint in the present invention;

Fig. 27 shows a cross-sectional view of a conventional spot-welded joint in the prior art;

Fig. 28 shows a cross-sectional view of the spot-welded joint in the present invention;

Fig. 29 shows a cross-sectional view of another spot-welded joint in the present invention;

Fig. 30 shows a cross-sectional view of another spot-welded joint in the present invention;

Fig. 31 shows a cross-sectional view of another spot-welded joint in the present invention;

Fig. 32 shows a cross-sectional view of another spot-welded joint in the present invention;

Fig. 33 shows a cross-sectional view of another spot-welded joint in the present invention.

In the Figures, references are as follows:

1- First workpiece;
2- Second workpiece;
10- First workpiece surface;

11- First indentation surface;
12- Bonding interface;
111- First surface;
112- Second surface;
3- Melted zone (weld nugget);
31- Nugget boundary;
20- Second workpiece surface;
1111- Annular Ridge;
1122- Base surface;
1123- Inner surface;
1121- Outer surface;
21- Second indentation surface;
4- Welding electrode;
41- Welding electrode center surface;
42- Welding electrode outer surface.

## Detailed Description

The inventors have conducted extensive and in-depth research and developed a spot-welded joint and a manufacturing method therefor for the first time after extensive screening. The spot-welded joint of the present invention forms a round pancake-shaped weld nugget which is thin in the center and thick on the periphery through an indentation including a first surface convex outwardly located at the center and a second surface concave inwardly located on the periphery of the first surface, so that the spot-welded joint has better surface quality and welding performance, and higher joint strength. In addition, the spot-welded joint of the present invention can form a weld nugget by multi-stage welding with multi-segment pulse and inter-stage cooling, so that the formed weld nugget is more stable and requires less welding energy. The present invention is completed on this basis.

The present invention provides a spot-welded joint, which has a central symmetrical structure as a whole. When viewed along the cross-section of the joint, the joint comprises a melted zone and an unmelted zone. The spot-welded joint has a bonding interface and opposite upper and lower surfaces. The outer surfaces of the workpieces in the weld spot region have indentations generally away from the melted zones of the workpieces.

Wherein at least one side indentation comprises at least a first surface at the center and a second surface gradually extending outward. The maximum distance $h1$ between the first surface at the center of the indentation and the outer surface of the workpiece is lower than the maximum distance $h2$ between the second surface outside the center indentation and the workpiece surface.

In a preferred embodiment, the joint is obtained by spot welding method, which sequentially comprises: providing a pair of welding electrode caps, a surface of at least one electrode cap has a shape similar to the joint indentation; then providing a resistance spot welding process comprising the following steps:

a pre-pressing stage: during this stage, electrode pressure is applied to the workpieces;

a welding stage: during this stage, one or more stages of welding current are applied to the workpieces to form a molten core;

a condensation stage: during this stage, the molten core is condensed to form a final spot welding joint.

In a preferred embodiment, the center of the welding electrode cap is concave (depression), wherein the ratio of the maximum depth of the depression to its outer circumferential diameter is 1%-20%, preferably 2%-10%.

In a preferred embodiment, the diameter of the circumference of the outer edge of the first surface located at the center of the indentation does not exceed 8 mm, preferably not exceeding 7mm.

In a preferred embodiment, the diameter of the outer circumference of the indentation does not exceed 14mm, preferably not exceeding 8-13mm.

In a preferred embodiment, the first surface at the center of the indentation has a curved surface structure as a whole, and the distance h1 between the top of the curved surface and the workpiece surface (referring to the base surface in the workpiece surface) is -0.3 to +0.3 mm, preferably -0.15 to +0.15 mm, where the negative sign "-" indicates that the top is within (below) the base surface, and "+" indicates that the top is outside (above) the base surface.

In a preferred embodiment, the first surface at the center of the indentation has a plurality of discontinuously distributed annular ridge structures with protrusions or depressions. The height of the annular ridge is 15-300 $\mu$m; preferably 30-250 $\mu$m.

In a preferred embodiment, the second surface on periphery of the indentation has a plurality of convex or concave annular ridge features, and the height of the annular ridge is 15-300 $\mu$m; preferably 30-250 $\mu$m.

In a preferred embodiment, the second surface on periphery of the indentation is composed of multiple continuous flat surfaces and curved surfaces.

A spot-welded joint is also provided, which comprises, as viewed along its cross section:

a central melted zone and a unmelted zone. The boundary of the melted zone is the weld nugget boundary.

The projection length of the melted zone on the bonding interface is d, and the maximum projection height of the 40% range of the weld nugget within the inner center of the melted zone in the direction of the workpiece thickness is h5, and the maximum projection height of the 60% range of the weld nugget located outside the melted zone in the direction of the workpiece thickness is h6, where h6≥h5.

In a preferred embodiment, the thickness of the thinnest workpiece in the weld joint is w, 0.5≤w≤4.0mm; wherein d≥4.

In a preferred embodiment, in the welded joint, h6 ≥ 0.3w, h5≥0.2w.

A spot-welded joint is provided, which has a central symmetrical structure as a whole. When viewed along the cross-section of the joint, the joint comprises a melted zone and an unmelted zone. The spot-welded joint has a bonding interface and the opposite upper and lower surfaces of the welding workpiece. The surfaces of the workpieces in the weld spot region have indentations generally away from the melted zones of the workpieces. The boundary between the melted zone and the unmelted zone is the nugget boundary.

Wherein at least one side indentation comprises at least a first surface at the center and a second surface gradually extending outward. The maximum distance between the first surface at the center of the indentation and the surface of the workpiece is lower than the maximum distance between the second surface at the edge of the indentation and the workpiece surface.

The projection length of the melted zone on the bonding interface is d, and the maximum projection height of the 40% range of the weld nugget within the inner center of the melted zone in the direction of the workpiece thickness is h5, and the maximum projection height of the 60% range of the weld nugget located outside the melted zone in the direction of the workpiece thickness is h6, where h6≥h5.

In a preferred embodiment, the joint is obtained by spot welding method, which sequentially comprises: providing a pair of welding electrode caps, a surface of at least one electrode cap has a shape similar to the joint indentation; then providing a resistance spot welding process comprising the following steps:

a pre-pressing stage: during this stage, electrode pressure is applied to the workpieces;

a welding stage: during this stage, one or more stages of welding current are applied to the workpieces to form a molten core;

a condensation stage: during this stage, the molten core is condensed to form a final spot welding joint.

In a preferred embodiment, the diameter of the circumference of the outer edge of the first surface located at the center of the indentation does not exceed 8 mm.

In a preferred embodiment, the thickness of the thinnest workpiece in the weld joint is w, 0.5≤w≤4.0mm; wherein d≥4.

In a preferred embodiment, in the welded joint, h6≥0.3w, h5≥0.2w.

The main advantages of the present invention comprise:

(a) The provided spot-welded joint has a shallower center indentation compared to the outer indentation on the surface of the welded joint, which helps to reduce crack level welding penetration on the center surface of the welded joint, improve the strength and surface quality of the welded joint, and enhance its aesthetics;

(b) The thickness of the weld nugget at the center of the melted zone should not exceed the thickness of the edge, which helps to improve the load-bearing capacity of the weld edge, reduce the occurrence of internal cracks in the center, and enhance the strength of the weld;

(c) Adopting a multi-stage pulse current welding method can fully avoid overheating of the welded joint surface, accelerate its heat dissipation, reduce welded joint surface adhesion, improve surface quality and electrode life, while avoiding defects such as splashing caused by excessive internal heating speed, reducing energy dissipation, and saving energy.

The present invention is further described below in conjunction with specific embodiments. It should be understood that these examples are intended to illustrate the invention only and not to limit the scope of the invention. Furthermore, the drawings are schematic diagrams, and therefore the apparatus and device of the present invention are not limited by the size or scale of the schematic diagrams.

It should be noted that in the claims and specification of the present patent, relational terms such as first and second, etc. are only used to distinguish one entity or operation from another entity or operation, and do not necessarily require or imply that there is any such actual relationship or order between these entities or operations. Moreover, the terms "comprise", "include" or any other variant thereof are intended to cover non-exclusive inclusions such that a process, method, article or device comprising a series of elements comprises not only those elements, but also other elements not explicitly listed, or also elements inherent to such process, method, article or device. In the absence of further restrictions, the element defined by the statement "include a/an" do not exclude the existence of other identical elements in the process, method, article or device including the element.

**Example**

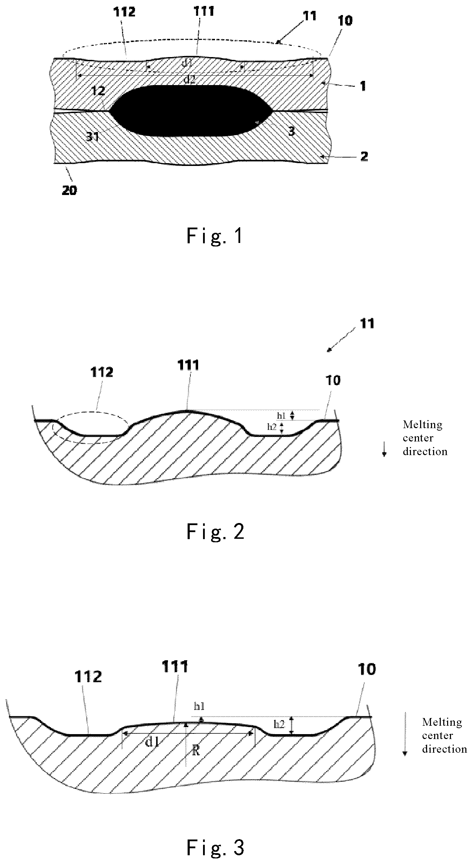

Referring now to Fig. 1, Fig. 1 shows a schematic cross-sectional view of a spot-welded joint involved in the present invention. The joint is obtained by resistance spot welding the first workpiece 1 and the second workpiece 2. The joint includes a weld nugget 3 formed by the melted zone, and the nugget boundary 31. The surface of the joint has formed spot-welded indentations. The joint has a first workpiece surface 10, a second workpiece surface 20, and a bonding interface 12. The indentation surface is composed of a first surface 111 at the center and a second surface 112 away from the center. The height from the highest point of the first surface 111 of the indentation to the base surface, which refers to the surface of the first workpiece surface 10 other than the indentation, of the first workpiece surface 10 is $h1$, and the height from the lowest point of the second surface 112 to the base surface of first workpiece surface 10 is $h2$, $h1 \leq h2$. That is, along the direction facing the melting center, the first surface 111 located at the center of the indentation is more outward and has a shallower depression than the second surface 112 located outside the indentation. If the distance away from the melting center (from the base surface) is defined as a positive value and the distance toward the melting center (from the base surface) is defined as a negative value, then $h1$ is generally between -0.3 and 0.3mm, preferably between -0.2 and 0.2mm. The diameter of the outer circumference of the first surface 111 is $d1$, which is generally 2-6mm, preferably 3-5mm. The diameter of the outer circumference of the second surface 112 is $d2$, which is 6-16mm; preferably 8-14mm.

As shown in Fig. 2, a partial enlarged view of the indentation surface 11 is presented. The first surface 111 located at the center of the indentation can have various shape features. The first surface 111 shown in Fig. 2 is a surface formed by the rotation of a circular arc. The first surface 111 shown in Fig. 3 is composed of a circular arc surface with a certain curvature radius. Generally, the curvature radius R of the circular arc surface is not less than 5mm, preferably $5 \leq R \leq 100$mm. The positions of the first surface 111 and the second surface 112 in the indentation relative to the workpiece surface 10 can be in various forms. As shown in Fig. 2, along the melting center direction, the first surface 111 of the indentation is higher relative to the workpiece surface 10, while Fig. 3 shows that the first surface 111 is lower relative to the workpiece surface 10, that is, $h1$ is located on the outer or inner side of the workpiece surface, which is acceptable in the present invention.

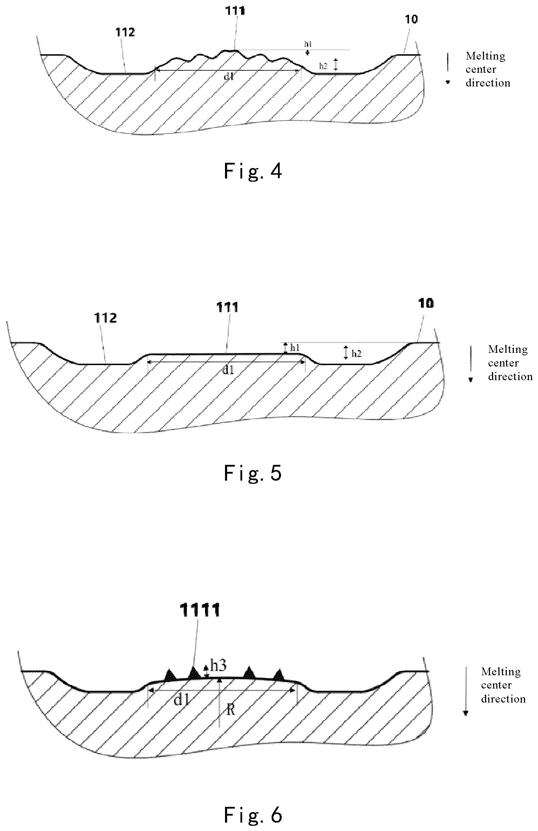

It is worth noting that the first surface 111 at the center of the indentation can have various shape features, for example, its cross-sectional shape can be composed of any combination of multiple straight lines or curves. As shown in Fig. 4, the first surface 111 is a rotating surface composed of multiple smooth transition curves. The first surface is a flat end face, as shown in Fig. 5. The first surface 111 is generally a continuous and smooth transition surface to ensure smooth deformation of the material during welding without defects such as cracks. In particular, there may be multiple protruding or recessed annular ridge structures on the first surface at the center of the indentation, as shown in Fig. 6, which is a schematic diagram of the first surface with two circles of protruding annular ridges 1111. The height $h3$ of the annular ridges 1111 is generally 15-300 $\mu$m.

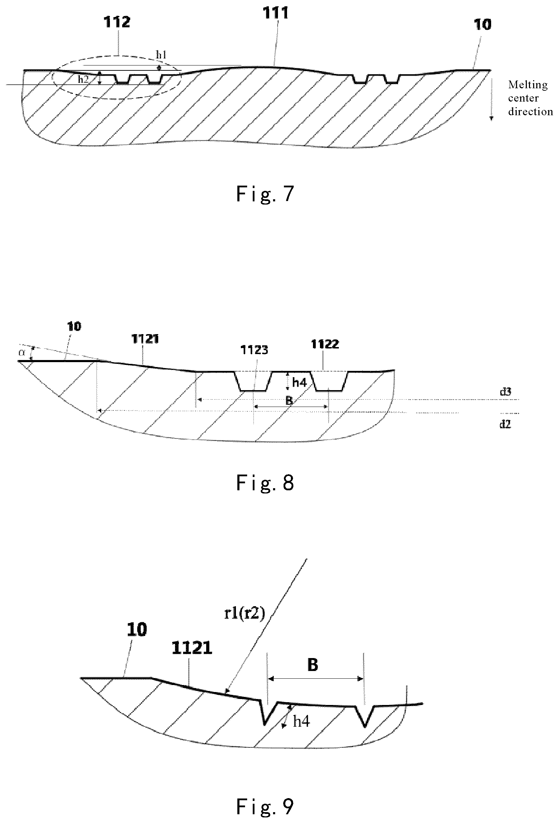

The second surface 112 of the indentation surface can also include various structural shapes. The cross-sectional shapes of the second surface shown in Figs. 1 to 5 are each composed of a combination of circular arc(s) and straight line(s). In fact, the second surface 112 can also include multiple convex or concave annular ridge structures. Fig. 7 is a schematic diagram showing that the second surface 112 has two circles of concave annular ridges (or can be directly referred to as "annular grooves/depressions"). The number of annular ridges is 1-5, preferably 2-4. The distance between the concave annular ridge and its base surface is h4. The base surface where the annular ridge is located is either flat or curved. Fig. 8 is a partial enlarged view of the portion having annular ridges on the second surface 112. The second surface 112 is composed of an outer surface 1121 and an inner surface 1123. The outer and inner surfaces are relative to the central weld nugget 3, with the one near the weld nugget 3 referred to as the inner surface and the one away from the weld nugget 3 referred to as the outer surface. The cross-sectional profile of the inner surface 1123 is composed of a combination of convexities and concavities formed by a plurality of straight line(s) and curve(s). Wherein, the base surface 1122 where the inner surface 1123 is located can be flat and/or curved. When the base surface 1122 is flat, the height of the maximum depression of the annular ridge relative to the base surface 1122 is h4, which is generally 15-300 $\mu$m; preferably 30-280 $\mu$m.

The center distance B between the annular ridges is generally 300 $\mu$m$\leq$B$\leq$ 2000 $\mu$m, preferably 400 $\mu$m$\leq$B$\leq$ 1500 $\mu$m.

The diameter of the outer circumference of the base surface 1122 is d3, generally 7-13mm, preferably 8-12mm. The outer surface 1121 can be a conical or curved surface. When the outer surface 1121 is a conical surface, the angle formed between it and the workpiece surface 10 is generally $\alpha$, and $\alpha$ does not exceed 40°, preferably 5°$\leq\alpha\leq$30°, as shown in Fig. 8. The outer surface 1121 can also be a curved surface as a whole. When it is a curved surface, its radius r1 of the curved surface is not less than 20mm, preferably 25$\leq$r1$\leq$100mm. The base surface 1122 can also be a curved surface, and the radius r2 of the curved surface is not less than 25mm, preferably 30$\leq$r2$\leq$ 100mm. In a particular embodiment, the outer surface 1121 and the base surface 1122 are the same surface, that is, both are curved surfaces, as shown in Fig. 9.

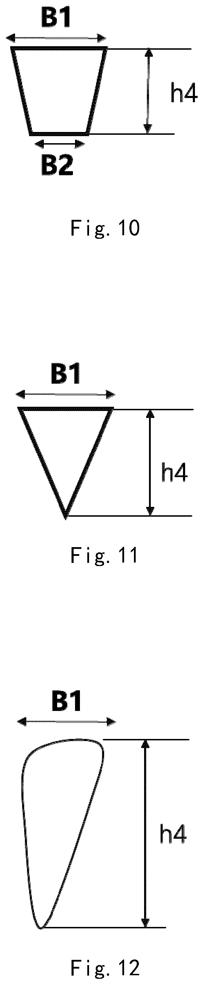

Both the annular ridges on the first surface 111 and the second surface 112 can have various structural types. The annular ridge is a structure that can be formed by rotating any combination of straight and curved lines. As shown in Fig. 10, (the cross-sectional shape of) the annular ridge is in a trapezoidal structure as a whole, with a bottom surface width of B1 and a top surface width of B2. Generally, 200 $\mu$m $\leq$B1$\leq$1000 $\mu$m, 0$\leq$B2$\leq$500 $\mu$m, preferably 300 $\mu$m$\leq$B1$\leq$600 $\mu$m, and 0$\leq$B2 $\leq$300 $\mu$m. Specifically, when B2 is zero, the annular ridge is in a triangle shape, as shown in Fig. 11. It is worth mentioning that the cross-sectional shape of the annular ridge can be composed of any straight lines and curves. For example, as shown in Fig. 12, the entirety of the shape is composed of curves and forms a triangle-like shape. Various transition corners can be included between any straight line and curve, and any other shape is also possible, which will not be repeated here.

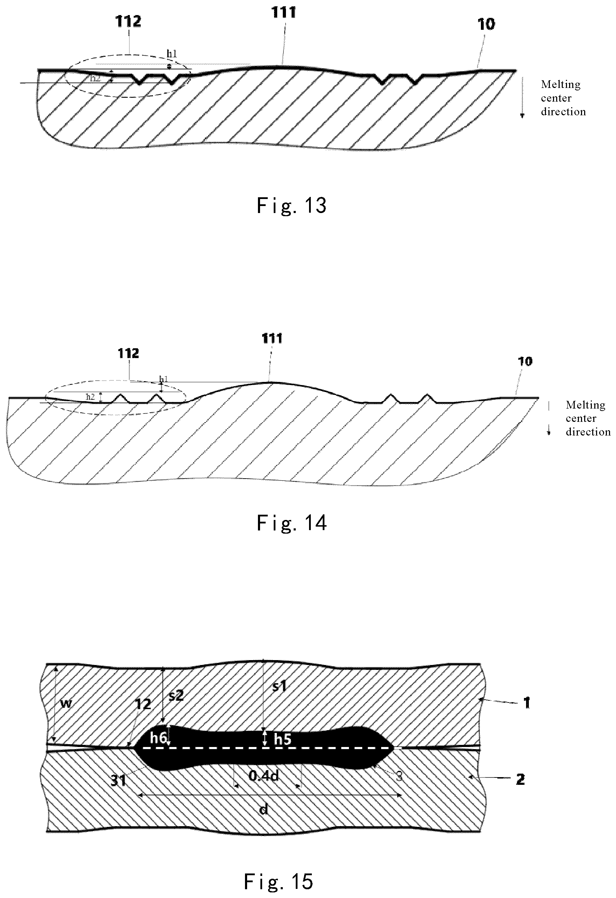

The shape of the joint indentation surface can be composed of any combination of the first and second surfaces mentioned above. As shown in Fig. 13, the first surface 111 is a curved surface, and the second surface 112 is a configuration of an outer curved surface combined with a flat base surface, wherein there are two overall inverted triangular annular depressions on the base surface. Fig. 14 shows a schematic diagram when the annular ridge on the second surface is convex.

Referring now to Fig. 15, the joint described in the present invention, when viewed along its cross-section, includes a melted zone 3 (i.e., "weld nugget") at the center and a unmelted zone on the periphery, with the junction of the two referred to as the nugget boundary 31. The projection length of the melted zone 3 on the bonding interface between the workpiece 1 and the workpiece 2 is d, and the maximum projection height of the 60% range of the weld nugget within the inner center of the melted zone in the direction of the workpiece thickness is h5, and the maximum projection height of the 40% range of the weld nugget located outside the melted zone in the direction of the workpiece thickness is h6, wherein h6$\geq$h5. The thickness of the workpiece 1 in the welded joint is w, 0.5$\leq$w$\leq$4.0mm. Among them, $d \geq 4\sqrt{w}$ is satisfied; preferably, $d \geq 4.5\sqrt{w}$; at the same time, h6$\geq$0.3w, h5$\geq$0.2w. The melted zone 3 has a shape similar to peanut shells, and its highest melting depth is not located at the center, but in the 60% d area near the edge. This type of weld nugget morphology is beneficial for providing better melting depth, bearing capacity, and fracture energy absorption ability at the weld nugget edge.

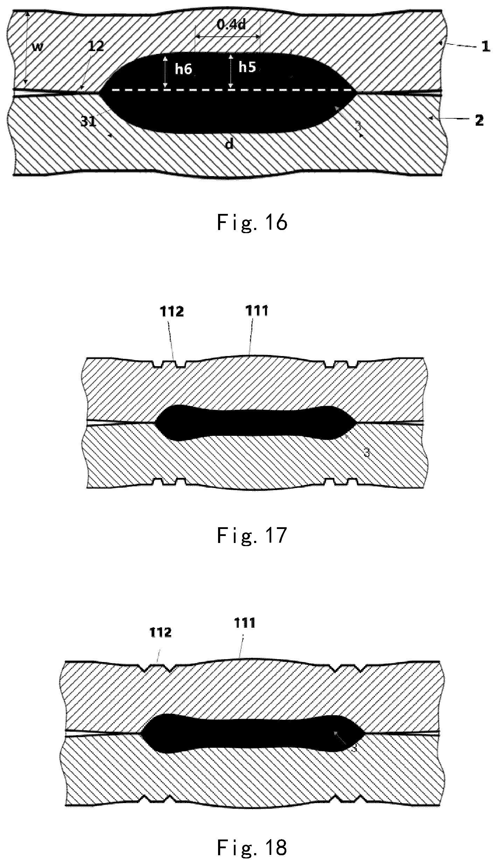

The nucleation morphology within the 60% d and 40% d ranges of the melted zone can include various types. As shown in Fig. 16, the shape of melted zone 3 is basically elliptical, but in reality, the height h5 within the range of 0.6d is still less than or equal to h6.

There can be many combinations of the shape of the melted zone and the indentation on the joint surface. As shown in Fig. 17, the first surface 111 located at the center of the indentation is a curved surface, the second surface 112 is a surface having annular depressions with trapezoidal cross-section, and the melted zone 3 is a weld nugget with a peanut shell shape. As shown in Fig. 18, the first surface 111 located at the center of the indentation is a curved surface, the second surface 112 is a surface having annular depressions with triangular-shaped cross-section, and the melted zone 3 is still a weld nugget with a peanut shell shape. The peanut shell shape herein is the cross-sectional shape of the weld nugget observed from the center section of the welded workpiece, and its overall shape should be a circular pancake shape with a thin center and a thick periphery.

The shortest distance s1 (mm) between the thicker area around the weld nugget and the second surface 112, and the longest distance s2 (mm) between the thinner area at the center and the first surface 111 of the workpiece, satisfy the following criteria:

$$0.2 \leqslant s1 \leqslant w - 0.8\sqrt{w}$$ ; s2≤0.9w; s1≥s2; preferably s1 ≥ 1.2*s2, where w is the thickness of the workpiece.

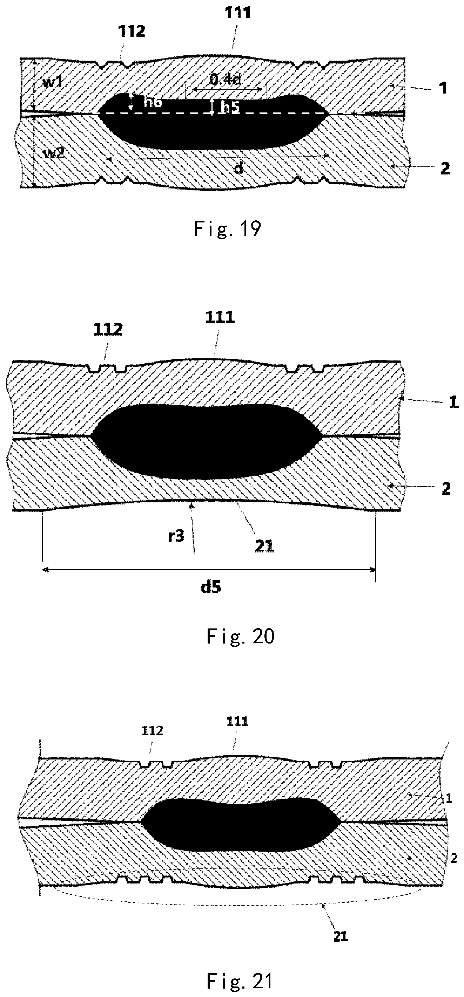

The shape of melted zone 3 is not necessarily a vertically symmetrical structure. Asymmetric structures are often formed during welding of workpieces with uneven thickness or heterogeneous materials. As shown in Fig. 19, when the thicknesses of two workpieces are different, the thickness of the first workpiece is w1 and the thickness of the second workpiece is w2, generally w1<w2. At this point, the melting height within at least 0.4d range of the inner melted zone on the first workpiece side is h5, and the melting height within the remaining 0.6d range is h6, wherein h6>h5, then $d \geqslant 4\sqrt{w1}$.

Similarly, on the indentation surfaces of the joint, the upper and lower surfaces are not necessarily exactly the same. As shown in Fig. 20, the first workpiece surface and the second workpiece surface are not completely identical. The first workpiece surface has a first surface 111 with an arc-shaped protrusion at the center and a concave structure with annular ridges on the outside; and the second workpiece surface is an arc surface with a curvature radius r3 as a whole. Generally, the outer circumference diameter d5 of the second indentation surface is 6-14mm, preferably 8-12mm, while r3 is not less than 20mm, preferably 25-200mm. The first indentation surface 11 and the second indentation surface 21 may also have other different types of combinations. As shown in Fig. 21, the center of the first indentation surface 11 is a convex curved surface, and the outer side is a second surface with two annular concave structures; while the center of the second indentation surface 21 is the first surface of the overall curved surface structure, and the outer side is the second surface with three annular concave structures. So the first surface of the first indentation and the second surface of the second indentation can be composed of various shapes and sizes including different concave/ridge structures, sizes, flat surfaces or curved surfaces.

In the present invention, the first workpiece 1 and the second workpiece 2 are aluminum workpieces, specifically aluminum alloys such as aluminum magnesium alloy, aluminum silicon alloy, aluminum magnesium silicon alloy, or aluminum copper alloy, or magnesium alloys such as magnesium aluminum alloy, magnesium manganese alloy, magnesium zinc zirconium alloy, etc., which can be in a deformed or cast state; and its material state can include various tempering, including annealing, strain strengthening and other heat treatment states. In addition, inorganic or organic oil films (such as lubricating oil films) can also be formed on the surface of the coating. The joint can be formed by resistance spot welding two or more workpieces, and the thickness of each workpiece can be the same or different. It should be noted that the term "workpiece" used herein refers to a wide range of workpieces including metal sheet layers, protrusions, castings, and other workpieces that can be resistance spot welded.

There may also be an uncured but heat curable adhesive between workpieces 1 and 2, with a thickness generally between 0.1-5 mm, preferably between 0.2-2 mm. The thickness of the adhesive layer in the weld area may change under the electrode pressure F during the welding process. Generally speaking, adhesive is applied to the contact surfaces of the first metal workpiece 1 and the second metal workpiece 2. After resistance spot welding, the stacked workpieces is cured in an oven or other heating device to achieve a firm bond with the adhesive. The thermosetting adhesive is generally a thermosetting epoxy resin, which is easy to understand in this field.

The joint is obtained by spot welding method, which sequentially comprises: providing a pair of welding electrode caps, at least one of which has a shape similar to the joint indentation; then proceeding with the resistance spot welding process of the following steps:

> Pre-pressing stage: during this stage, electrode pressure is applied to the workpieces;
> Welding stage: during this stage, one or more stages of welding current are applied to the workpieces to form a molten core;
> Condensation stage: during this stage, the molten core is condensed to form a final spot welding joint.

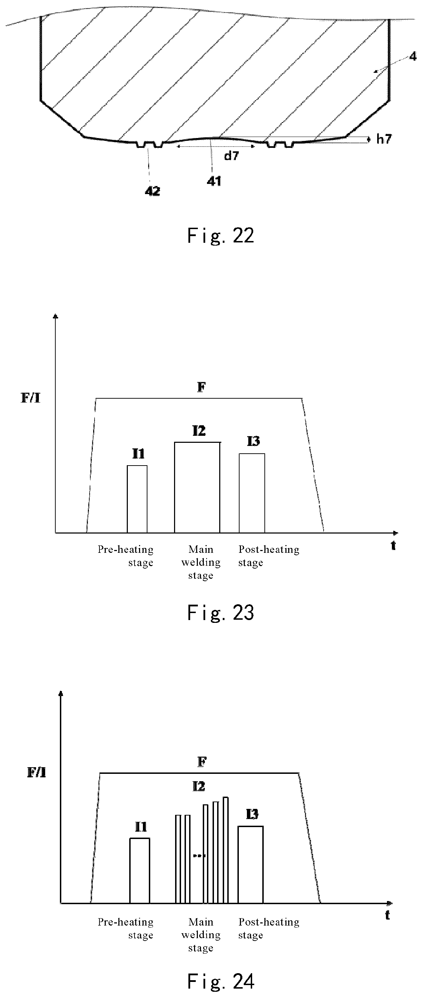

The shape of the welding electrode cap is similar to the shape of the indentation on the surface of the joint. For example, when the indentation on the surface of the joint is symmetrical with a convex arc surface at the center and a concave annular ridge at the outer edge, the electrode cap 4 has a concave surface 41 at the center and a convex annular ridge 42 at the outer edge. The height of the central depression is h7 (relative to the height of the surface corresponding to the base surface of the joint), and the diameter of the outer circumference of the depression is d7. Generally, h7 is 0.05-1.0mm, preferably 0.1-0.5mm; d7 is 2-8mm, preferably 3-7mm. Meanwhile, h7/d7 is 1-20%, preferably 2-15%. The cross-sectional shape of electrode cap 4 at this time is shown in Fig. 22. Similarly, when the indentation on the surface of the joint is of a different shape or the indentation on both sides of the joint has an asymmetric surface structure, the corresponding welding electrode cap also has a shape similar to its shape. The welding surface of the electrode cap can be spherical, end plane, or other special shaped surfaces, such as the surface of the electrode cap with a protruding structure(s) or a concave structure(s), which will not be described in detail here. Overall, welding electrodes can be made of any electrically and thermally conductive material, such as copper alloys including copper chromium (CuCr) alloy, copper chromium zirconium (CuCrZr) alloy, copper alloys with added alumina particles, or various other copper alloys that can be used as electrode materials.

When performing resistance spot welding process, as shown in Fig. 23, it is a timing diagram of a spot welding process involved in the present invention, including the pre-heating stage, the main welding stage, and the post-heating stage. Generally speaking, one or more stages of welding current may flow during the welding process, particularly during the main welding stage. The effective value of welding current I1 in the pre-heating stage is generally 8-30KA, preferably 10-20KA, and more preferably 12-15KA. The energization time t1 during this stage is 30-60ms. The pre-heating stage can allow the workpieces fully contact and reduce the contact resistance between the welding electrode and the workpieces, thereby improving the electrode life and enhancing the stability of the welding point. During the main welding stage, a qualified and stable weld nugget is formed. Generally, the effective value of the current I2 is 20-60KA, and the total energization time t2 is 50-300ms. It is preferred that the effective value of the current I2 is 25-50KA, and the total energization time t2 is 60-200ms. When the main welding stage is to form a sufficiently large weld nugget through multiple identical or different current pulses, as shown in Fig. 24, each welding current 121, 122... I2n during this stage is generally 25-50KA, and the duration t2n of a single welding pulse is generally 5-30ms, preferably 6-20ms, wherein n is an integer greater than or equal to 1, preferably n≥3, and the pulse interval time tc is 1-10ms. Among them, the number of pulses n satisfies

$$120w1 \geqslant \sum_1^n t2n \geqslant 60w1,$$

and the unit of wl is mm. The pulse interval time tc satisfies tc≥w1; preferably, tc≥1.5 * w1, and the number of pulses n ≥ 3. During this stage, continuous heating and cooling are performed so that the electrode can be cooled and the internal weld nugget can maintain a sufficient temperature to form a larger weld nugget, thereby reducing adhesion on the welding surface. The pulse interval cooling time is 1-10ms. The total main welding time is 50-150ms, preferably 60-130ms. The current amplitude of each pulse can be the same or different to ensure the formation of sufficient weld nugget size, while reducing the heat generation between the electrode and the workpieces and improving the electrode life.

Resistance heat will be generated between the workpieces, resulting in the formation of weld nugget 3, and indentation will be formed on the weld surface under the action of electrode pressure. The first surface with a relatively convex center can prevent internal heat from concentrating at the center and causing welding defects such as thermal cracks, and the thicker unmelted area in the center of the weld nugget can also prevent defects such as thermal cracks caused by internal welding penetration, and avoid defects such as electrode adhesion caused by heat being concentrated in the center of the weld. Generally speaking, in the prior art, the central area generates more heat and dissipates heat slowly, which can easily cause the weld nugget to fail to grow fully, resulting in spatter, internal cracks and adhesion. However, the weld joint of the present invention has a more uniform temperature and stress distribution (between the inside and outside), which makes it easy to form a uniform weld nugget, and the edge of the internal melted zone has a thicker melting depth, which helps to improve the joint strength, thereby making the stress distribution in the entire weld nugget more uniform, reducing residual stress and improving the performance of the weld point. When the outer indentation has an annular ridge(s) and the aluminum oxide film at the annular ridge is peeled off, the contact resistance can be reduced during welding, and the contact area can be increased to enhance heat dissipation and reduce the heat between the electrode welding surface and the workpiece contact surface, thereby improving the service life of the electrodes and the quality of the weld surface.

The current pulse I3 during the post-heating stage is generally 15-40KA, preferably 25-35KA. The duration t3 is 20-100ms, preferably 30-80ms, and more preferably 30-60ms. I3 should not exceed 0.8 * I2max, where I2max is the maximum peak current during the post-heating stage. The cooling interval between the post-heating stage and the main welding stage is not less than 15ms, generally 15-40ms, which can ensure that the condensation of the weld nugget is completed at a lower cooling rate, thereby avoiding the formation of internal shrinkage cavities and cracks. The presence of the post-heating stage can reduce the shrinkage stress of the melted workpieces during the cooling stage, thereby reducing the occurrence of internal shrinkage porosity and cracks. At the same time, during the entire welding stage, the electrode pressure F is generally 2000-10000N, preferably 3000-8000N, which can be varied during the welding stage and may not always remain constant. The pressurization method can be pneumatic or servo pressurization, which is easy to understand in this field.

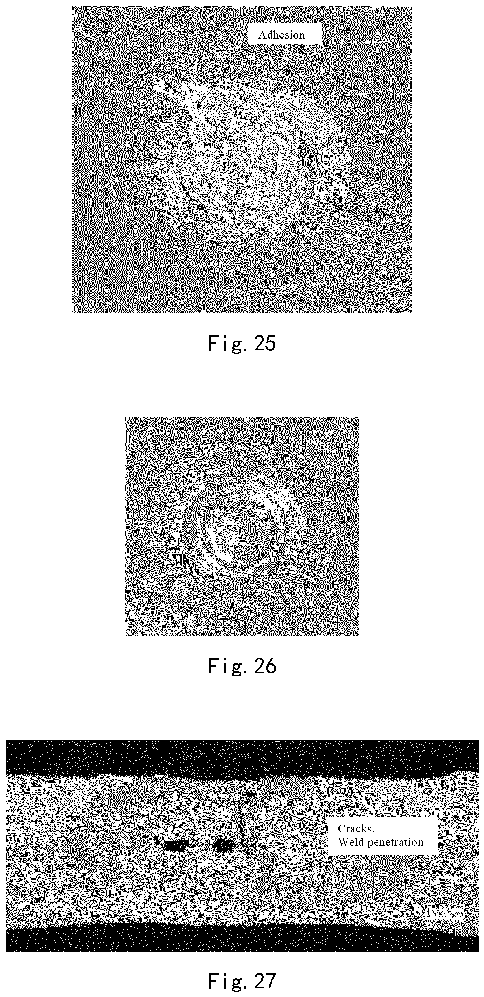

Referring now to Fig. 25, the surface morphology of the traditional spot-welded joint obtained using 5-series aluminum alloy is shown. It can be seen that the surface indentation is spherical as a whole, and there is a large amount of copper aluminum alloyed structure attached to the surface, which seriously affects the electrode life, increases manufacturing costs, and has poor appearance of the weld. As a comparison, Fig. 26 shows a picture of the indentation on the surface of the weld joint in the present invention. The resulting indentation on the surface of the weld joint is uniform, beautiful, and has no alloying reaction layer attached, which can greatly improve manufacturing efficiency, reduce costs, and improve surface quality.

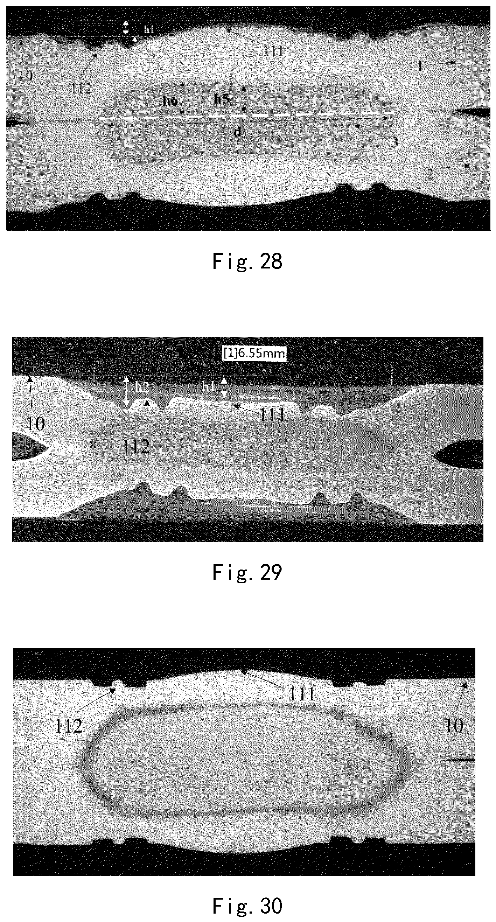

Fig. 27 shows a cross-sectional view of the weld nugget of conventional aluminum workpieces spot-welded. Cracks and internal defects are prone to occur in the center of the melted zone, which can easily lead to electrode adhesion in the center of the melted zone, resulting in unstable welding quality, decreased electrode life, and high manufacturing costs. Fig. 28 shows the typical cross-sectional morphology of the joint formed by spot welding of 6-series aluminum alloy according to the present invention. The indentation surface is composed of a central first surface 111 and an outer second surface 112, forming a central rotating structure as a whole. The height of the highest point of the first surface 111 from the workpiece surface 10 is h1, and the height of the lowest point of the second surface 112 from the workpiece surface 10 is h2. The second surface 112 is generally lower than the workpiece surface 10, while the first surface 111 is higher than the workpiece surface 10. The diameter of the weld nugget 3 in the melted zone is d, the melting height within the most central range is h5, and the melting height at the outer edge is h6, where h6 > h5. This type of weld nugget shape can avoid surface defects such as cracks caused by overheating at the center position and improve the strength of the weld joint.

In another embodiment, for a 1.2mm 6-series aluminum alloy, the weld nugget size can reach 6.55mm without surface weld penetration, cracks, or other defects. As shown in Fig. 29, the first surface 111 and the second surface 112 of the weld joint surface indentation are both lower than the workpiece surface by 10, and the second surface 112 of the indentation has a triangular annular depression structure with two circles of depressions. But its h2 is still greater than h1.

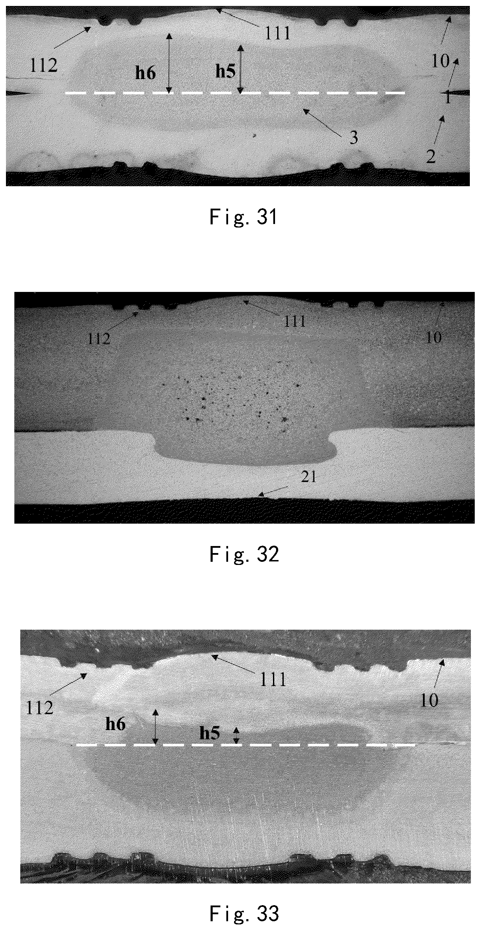

As shown in Fig. 30, the cross-sectional morphology of the 2mm 7-series aluminum alloy spot-welded joint is presented. The first surface 111 at the center of the indentation is generally higher than the second surface 112 of the indentation, where the second surface 112 has a trapezoidal ring structure with two concave circles, which is conducive to reducing the formation of cracks on the first surface 111. The cross-sectional morphology of the welded joint obtained by resistance spot welding of two layers of AZ31 magnesium alloy is shown in Fig. 31. The indentation is composed of the first surface 111 at the center and the second surface 112 on the outer side. The height of the center part of the weld nugget 3 formed by the melted zone is h5, while the maximum height of the outer edge is h6, where h6 > h5.

For workpieces of uneven thickness, Fig. 32 shows the welding joint obtained by resistance spot welding of 4.0mm cast aluminum alloy and 2.3mm aluminum alloy heterogeneous materials of uneven thickness according to the present invention. The indentation on both sides of the joint can be different. The indentation on the cast aluminum side has a first surface 111 at the center and a second surface 112 at the outer edge, where the second surface 112 has a three ring annular depression structure, while the indentation 21 on the 5 series aluminum alloy side is in the shape of a spherical depression as a whole. This combination helps to form a sufficiently large weld nugget size while also creating a deep melted zone on the thin plate side without causing defects such as weld penetration and cracks on the thick plate side. This has good adaptability when there are special requirements for surface protrusions or depressions in certain application environments.

Of course, the indentation on both sides of the welding point can also be symmetrical, as shown in Fig. 33, which shows the morphology of the joint section obtained by spot welding cast aluminum of uneven thickness and 5-series aluminum alloy. Both sides of the welded joint include a first surface 111 with a central protrusion and a second surface 112 with three circular depressions on the outer side. The maximum height of the melted zone center is h6 located at the edge, and the minimum height h5 is located at the center.

All documents mentioned in the present invention are cited by reference in this application, just as each document is cited separately as a reference. In addition, it should be understood that after reading the above teachings of the present invention, those skilled in the art can make various changes or modifications to the present invention, and these equivalent forms also fall within the scope defined by the appended claims of this application.

**Claims**

1. A spot-welded joint, comprising a first workpiece, a second workpiece, and a weld nugget for fixedly connecting the first workpiece and the second workpiece; at least one of an outer surface of the first workpiece and an outer surface of the second workpiece comprising a base surface and an indentation; wherein the indentation comprises a first surface which is located in center and protrudes outwards and a second surface which is located on periphery of the first surface and recessed inwardly, and a maximum distance h1 between the first surface and the base surface is smaller than a maximum distance h2 between the second surface and the base surface.

2. The spot-welded joint according to claim 1, wherein the first surface and/or the second surface have multiple discontinuous distributed protruding or recessed annular ridges; and a height of the annular ridge is 15-300 $\mu$m.

3. The spot-welded joint according to claim 1, wherein the weld nugget is in the shape of a circular pancake with a thin center and a thick periphery.

4. The spot-welded joint according to claim 1, wherein a longest distance s1 between a thinner area in middle of the weld nugget and the first surface of the workpiece, and a shortest distance s2 between a thicker area at peripheral and the second surface satisfy:

$$0.2 \leqslant s1 \leqslant w - 0.8\sqrt{w}$$ ; s2 ≤ 0.9w; s1 ≥ s2, where w is a thickness of the workpiece.

**5.** The spot-welded joint according to claim 1, wherein the first surface and/or the second surface are composed of a combination of multiple continuous flat surfaces and curved surfaces.

**6.** The spot-welded joint according to claim 1, wherein the spot-welded joint is a center symmetric structure.

**7.** A pair of spot welding electrode caps for welding to obtain the spot-welded joint according to any one of claims 1-6, wherein welding surfaces of the spot welding electrode caps have shapes adapted to outer surfaces of the first workpiece and the second workpiece, respectively.

**8.** A method for manufacturing the spot-welded joint according to any one of claims 1-6 by welding, comprising:

(1) providing a pair of spot welding electrode caps, wherein welding surfaces of the spot welding electrode caps have shapes adapted to outer surfaces of the first workpiece and the second workpiece, respectively;

(2) a pre-pressing stage, by the spot welding electrode caps, applying electrode pressure to the first and second workpieces during the pre-pressing stage;

(3) a welding stage, applying one or more stages of welding current to the first workpiece and the second workpiece to form the weld nugget during the welding stage; and

(4) a condensation stage, condensing the weld nugget to form a final spot-welded joint during the condensation stage.

**9.** The spot-welded joint according to claim 8, wherein the welding stage comprises a pre-heating stage, a main welding stage, and a post-heating stage;

an effective value of a welding current $I1$ during the pre-heating stage is 10-30KA, and an energization time $t1$ is 30-60ms;

an effective value of a welding current $I2$ during the main welding stage is 20-60KA, and a total energization time $t2$ is 50-300ms;

a welding current $I3$ during the post-heating stage is 15-40KA, and an energization time $t3$ is 20-100ms.

**10.** The spot-welded joint according to claim 9, wherein during the main welding stage, the weld nugget is formed by multiple identical or different current pulses, each welding current is 25-50KA, a duration of a single welding pulse is 5-30ms, a pulse interval time is 1-10ms; a number of pulses is at least 3; and a pulse interval cooling time is 1-10ms.

Fig. 1

Fig. 2

Fig. 3

Fig. 4

Fig. 5

Fig. 6

**112**　　　**111**　　　**10**

h1

h2

Melting
center
direction

Fig. 7

**10**

α　　　**1121**　　　**1123**　　　**1122**

h4

B

d3

d2

Fig. 8

r1(r2)

**10**　　　**1121**

B

h4

Fig. 9

**B1**

**B2**

h4

Fig. 10

**B1**

h4

Fig. 11

**B1**

h4

Fig. 12

Fig. 13

Fig. 14

Fig. 15

Fig. 16

Fig. 17

Fig. 18

Fig. 19

Fig. 20

Fig. 21

Fig. 22

Fig. 23

Fig. 24

F i g. 25

F i g. 26

F i g. 27

Fig. 28

Fig. 29

Fig. 30

Fig. 31

Fig. 32

Fig. 33

## INTERNATIONAL SEARCH REPORT

| International application No. |
| --- |
| **PCT/CN2023/113830** |

**A. CLASSIFICATION OF SUBJECT MATTER**

B23K11/11(2006.01)i; B23K11/10(2006.01)i; B23K11/30(2006.01)i; B23K11/00(2006.01)i; B23K35/00(2006.01)i

According to International Patent Classification (IPC) or to both national classification and IPC

**B. FIELDS SEARCHED**

Minimum documentation searched (classification system followed by classification symbols)

IPC: B23K11/-; B23K35/-

Documentation searched other than minimum documentation to the extent that such documents are included in the fields searched

Electronic data base consulted during the international search (name of data base and, where practicable, search terms used)

CNABS, CNTXT, ENTXT, DWPI, VEN, CJFD, CNKI, Elsevier Science: 杨上陆, 王艳俊, 点焊, 接头, 圆形, 环形, 圆环, 脊, 凸起, 突起, 中心, 中部, 中间, 电极, 凹槽, 凹陷, 深度, 高度, 焊核, 熔核, 预热, 主焊接, 后热, 冷凝, 凝固, 电流, 脉冲, 时间, spot, weld+, ring, donut, circular, convex, projection, nugget, joint, middle, center, electrode, recess, groove, depth, height, preheat, solid+, current, pulse, time

**C. DOCUMENTS CONSIDERED TO BE RELEVANT**

| Category* | Citation of document, with indication, where appropriate, of the relevant passages | Relevant to claim No. |
| --- | --- | --- |
| PX | CN 115255587 A (SHANGHAI INSTITUTE OF OPTICS AND FINE MECHANICS, CHINESE ACADEMY OF SCIENCES) 01 November 2022 (2022-11-01) claims 1-10 | 1-10 |
| PX | CN 116197509 A (SHANGHAI INSTITUTE OF OPTICS AND FINE MECHANICS, CHINESE ACADEMY OF SCIENCES) 02 June 2023 (2023-06-02) description, paragraphs 71-131, and figures 4 and 10-11 | 1-2, 5-10 |
| PX | CN 116213903 A (SHANGHAI INSTITUTE OF OPTICS AND FINE MECHANICS, CHINESE ACADEMY OF SCIENCES) 06 June 2023 (2023-06-06) figure 17 | 1, 6-8 |
| X | CN 215658527 U (SHANGHAI INSTITUTE OF OPTICS AND FINE MECHANICS, CHINESE ACADEMY OF SCIENCES) 28 January 2022 (2022-01-28) figures 2, 6-7, and 10 | 1, 3, 5-8 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 November 2023** | **20 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

# EP 4 578 584 A1

## INTERNATIONAL SEARCH REPORT

| International application No. |
| --- |
| **PCT/CN2023/113830** |

### C. DOCUMENTS CONSIDERED TO BE RELEVANT

| Category* | Citation of document, with indication, where appropriate, of the relevant passages | Relevant to claim No. |
| --- | --- | --- |
| Y | CN 215658527 U (SHANGHAI INSTITUTE OF OPTICS AND FINE MECHANICS, CHINESE ACADEMY OF SCIENCES) 28 January 2022 (2022-01-28) figures 2, 6-7, and 10 | 2, 5, 7-10 |
| Y | CN 110369848 A (SHANGHAI INSTITUTE OF OPTICS AND FINE MECHANICS, CHINESE ACADEMY OF SCIENCES) 25 October 2019 (2019-10-25) figures 14-38 | 2, 5, 7-10 |
| Y | CN 114101883 A (SHANGHAI INSTITUTE OF OPTICS AND FINE MECHANICS, CHINESE ACADEMY OF SCIENCES) 01 March 2022 (2022-03-01) description, paragraphs 36-46 | 8-10 |
| A | CN 105081545 A (SHANGHAI JIAO TONG UNIVERSITY) 25 November 2015 (2015-11-25) entire document | 1-10 |
| A | CN 112570867 A (SHANGHAI INSTITUTE OF OPTICS AND FINE MECHANICS, CHINESE ACADEMY OF SCIENCES) 30 March 2021 (2021-03-30) entire document | 1-10 |
| A | CN 112916992 A (SHANGHAI INSTITUTE OF OPTICS AND FINE MECHANICS, CHINESE ACADEMY OF SCIENCES) 08 June 2021 (2021-06-08) entire document | 1-10 |
| A | JP 2007130685 A (NIPPON STEEL CORPORATION) 31 May 2007 (2007-05-31) entire document | 1-10 |
| A | JP 2020078811 A (NIPPON STEEL CORPORATION) 28 May 2020 (2020-05-28) entire document | 1-10 |
| A | JP H07148580 A (TOYOTA MOTOR CORPORATION et al.) 13 June 1995 (1995-06-13) entire document | 1-10 |
| A | KR 20160002450 A (HYUNDAI STEEL CO., LTD.) 08 January 2016 (2016-01-08) entire document | 1-10 |
| A | US 2003192863 A1 (GENERAL MOTORS CORPORATION) 16 October 2003 (2003-10-16) entire document | 1-10 |
| A | US 2009218323 A1 (ABE HIROSHI; SHINMYOU TAKASHI et al.) 03 September 2009 (2009-09-03) entire document | 1-10 |

## INTERNATIONAL SEARCH REPORT
**Information on patent family members**

International application No.

**PCT/CN2023/113830**

| Patent document cited in search report | | | Publication date (day/month/year) | Patent family member(s) | | | Publication date (day/month/year) |
|---|---|---|---|---|---|---|---|
| CN | 115255587 | A | 01 November 2022 | CN | 218592043 | U | 10 March 2023 |
| CN | 116197509 | A | 02 June 2023 | None | | | |
| CN | 116213903 | A | 06 June 2023 | CN | 219358251 | U | 18 July 2023 |
| CN | 215658527 | U | 28 January 2022 | CN | 113199163 | A | 03 August 2021 |
| CN | 110369848 | A | 25 October 2019 | WO | 2019196494 | A1 | 17 October 2019 |
| | | | | DE | 112018007461 | T5 | 24 December 2020 |
| | | | | US | 2021146484 | A1 | 20 May 2021 |
| | | | | CN | 110369848 | B | 02 September 2022 |
| | | | | JP | 2021521017 | W | 26 August 2021 |
| CN | 114101883 | A | 01 March 2022 | CN | 114101883 | B | 02 June 2023 |
| CN | 105081545 | A | 25 November 2015 | None | | | |
| CN | 112570867 | A | 30 March 2021 | CN | 112570867 | B | 14 February 2023 |
| CN | 112916992 | A | 08 June 2021 | None | | | |
| JP | 2007130685 | A | 31 May 2007 | JP | 4724535 | B2 | 13 July 2011 |
| JP | 2020078811 | A | 28 May 2020 | JP | 7155903 | B2 | 19 October 2022 |
| JP | H07148580 | A | 13 June 1995 | JP | 3120933 | B2 | 25 December 2000 |
| KR | 20160002450 | A | 08 January 2016 | None | | | |
| US | 2003192863 | A1 | 16 October 2003 | US | 6646221 | B2 | 11 November 2003 |
| US | 2009218323 | A1 | 03 September 2009 | MY | 164289 | A | 15 December 2017 |
| | | | | WO | 2007055130 | A1 | 18 May 2007 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104043898 A
- US 6646221 B2